# EUROPÄISCHE PATENTSCHRIFT

(11) **EP 1 675 688 B1**
(45) Veröffentlichungstag und Bekanntmachung des Hinweises auf die Patenterteilung: **30.12.2009**
(21) Anmeldenummer: 04790705.0
(22) Anmeldetag: 21.10.2004
(51) Int. Cl.: B05B 7/00

(54) **VERFAHREN ZUR AEROSOLERZEUGUNG UND INJEKTOREINHEIT**
METHOD FOR PRODUCING AN AEROSOL AND INJECTOR UNIT
DISPOSITIF POUR LA PRODUCTION D'AEROSOL ET UNITE D'INJECTION

(30) Priorität: 21.10.2003 DE 10349642
(43) Veröffentlichungstag der Anmeldung: 05.07.2006
(73) Patentinhaber: bielomatik Leuze GmbH + Co. KG, 72639 Neuffen (DE)
(72) Erfinder: BOLZ, Detlef, 88422 Bad Buchau (DE)
(74) Vertreter: Thul, Hermann
(86) Internationale Anmeldenummer: PCT/EP2004/011898
(87) Internationale Veröffentlichungsnummer: WO 2005/039783

(56) Entgegenhaltungen:
- DE-A1- 10 104 012
- US-A- 3 926 280
- US-A1- 2002 084 146
- PATENT ABSTRACTS OF JAPAN Bd. 2003, Nr. 12, 5. Dezember 2003 (2003-12-05) -& JP 2004 150451 A (TACO CO LTD), 27. Mai 2004 (2004-05-27)

## Beschreibung

Die Erfindung betrifft eine Vorrichtung zur Aerosolerzeugung mit einer Flüssigkeitsleitung für einen Flüssigkeitsstrom sowie mit einer Transportgasleitung für eine Transportgasströmung, mit wenigstens einer Injektoreinheit, in der der Flüssigkeitsstrom und die Transportgasströmung zu einem Aerosol vermischbar sind, und mit einer Aerosolleitung, die zu einem im Bereich eines Werkzeugs angeordneten Aerosolabgang führt.

Die Erfindung betrifft zudem eine Injektoreinheit für eine Vorrichtung zur Aerosolerzeugung mit wenigstens einem Kanalabschnitt für eine Transportgasströmung und mit wenigstens einem Kanalbereich für den Flüssigkeitsstrom.

Eine derartige Vorrichtung zur Aerosolerzeugung wie auch eine derartige Injektoreinheit sind aus der DE 101 04 012 C2 bekannt. Aerosole dienen insbesondere als Schmier- und Kühlmittel für die spanende Bearbeitung von Werkstücken Um für ein relativ breites Spektrum von Bearbeitungswerkzeugen eine zuverlässige Aerosolerzeugung zu gewährleisten, weist die Vorrichtung zur Erzeugung von Aerosol ein Drosselsystem auf, mittels dessen ein Transportgas, vorzugsweise Druckluft, und eine Flüssigkeit, vorzugsweise Öl, der Injektoreinheit mengengesteuert zugeführt werden können. Die Druckluft und das Öl werden der Injektoreinheit zugeführt und in der Injektoreinheit verwirbelt, wodurch das Aerosol erzeugt wird. Das so erzeugte Aerosol wird in die Aerosolleitung gefördert, wo es im Bereich eines Aerosolabganges im Bereich des Werkzeuges an einer entsprechenden Bearbeitungsstelle austritt.

Aus der DE 101 39 950 A1 ist eine weitere Vorrichtung zum Erzeugen von Aerosolen bekannt, bei der an die Transportgasleitung, vorliegend an die Druckluftleitung, ein Druckmesser angeschlossen ist. Abhängig von den durch den Druckmesser erfassten Werten wird eine Differenzdruck- Fühlvorrichtung angepasst.

Aus der Druckschrift US 20021084146 A1 ist eine Vorrichtung zur Aerosolerzeugung mit einer Flüssigkeitsleitung für einen Flüssigkeitsstrom sowie mit einer Transportgasleitung für eine Transportgasströmung bekannt. Mindestens eine Injektoreinhelt ist vorhanden, in der der Flüssigkeltsstrom und die Transportgasströmung zu einem Aerosol vermischbar sind. Eine Aerosolleitung führt zu einem im Bereich eines Werkzeugs angeordneten Aerosolabgang, und die Injektoreinheit weist Strömungsleitmittel für die Transportgasströmung auf, die eine Ansaug- und Zerstäubungsfunktion für den Flüssigkeltsstrom bei einem Druckverlust für die Transportgasströmung definieren.

Das Dokument US-A-3926280 beschreibt eine Injektoreinrichtung für eine Vorrichtung zur Aerosolerzeugung mit wenigstens einem Kanalabschnitt für die eine Transportgasströmung und wenigstens einem Kanalbereich für einen Flüssigkeitsstrom. Der Kanalabschnitt für die Transportgasströmung ist als den Kanalbereich des Flüssigkeitsstroms konzentrisch umgebener Ringkanal ausgeführt, und die Strömungsleitmittel umfassen auf Höhe eines stutzenartigen Stirnendbereiches des Kanalbereiches des Flüssigkeitsstromes eine ringförmige Einschnürung, die gemeinsam mit einem Außenmantel des Stimendberelches einen Ringspalt definiert.

Aufgabe der Erfindung ist es, eine Vorrichtung zur Aerosolerzeugung sowie eine Injektoreinheit der eingangs genannten Art zu schaffen, mittels derer unabhängig von dem eingesetzten Bearbeitungswerkzeug eine kontinuierliche Aerosolerzeugung erzielbar ist.

Für die Vorrichtung zur Aerosolerzeugung wird diese Aufgabe dadurch gelöst, dass die Injektoreinheit Strömungsleitmittel für die Transportgasströmung aufweist, die eine Ansaug- und Zerstäubungsfunktion für den Flüssigkeitsstrom bei einem Druckverlust für die Transportgasströmung definieren, der geringer ist als ein minimal möglicher Druckverlust an dem Aerosolabgang. Dadurch, dass im Bereich der Injektoreinheit zwischen Eingangsseite und Ausgangsseite lediglich eine äußerst geringe Druckdifferenz entsteht, ist eine kontinuierliche Transportgaszuführung und demzufolge eine kontinuierliche Aerosolerzeugung erzielbar, unabhängig davon, ob der Aerosolabgang im Bereich des Werkzeugs selbst einen großen Druckverlust oder lediglich einen äußerst geringen Druckverlust aufweist. Durch die Erfindung lässt sich zumindest eine weitgehende Unabhängigkeit der Aerosolerzeugung von der Transportgasströmung erzielen. Selbst bei geringem Transportgasverbrauch bleibt die kontinuierliche Aerosolerzeugung aufrechterhalten. Durch die kontinuierliche Aerosolerzeugung treten nahezu keine Druckschwankungen auf. Die Prozesssicherheit insbesondere für eine spanende Bearbeitung für eine kontinuierliche Schmiermittelzufuhr wird erhöht. Das erzeugte Aerosol dient insbesondere zur Schmierung und zur Kühlung von Bearbeitungswerkzeugen an einer entsprechenden Bearbeitungsstelle eines Werkstückes.

In Ausgestaltung der Erfindung sind innerhalb der Injektoreinheit ein Kanalabschnitt für die Transportgasströmung und ein Kanalbereich für den Flüssigkeitsstrom koaxial zueinander angeordnet. Der Kanalabschnitt und der Kanalbereich weisen vorzugsweise zueinander parallele Strömungsrichtungen auf.

In weiterer Ausgestaltung der Erfindung ist der Kanalabschnitt für die Transportgasströmung als den Kanalbereich des Flüssigkeitsstromes konzentrisch umgebender Ringkanal ausgeführt, und die Strömungsleitmittel umfassen auf Höhe eines stutzenartigen Stirnendbereiches des Kanalbereiches des Flüssigkeitsstromes eine ringförmige Einschnürung, die gemeinsam mit einem Außenmantel des Stirnendbereiches einen Ringspalt definiert. Vorzugsweise wird der Flüssigkeitsstrom zentrisch zugeführt, so dass das Transportgas, insbesondere Druckluft, außen an dem Kanalbereich für den Flüssigkeitsstrom vorbeigeführt wird. Der Stirnendbereich des Kanalbereiches des Flüssigkeitsstromes bildet eine Abrisskante. Da auf Höhe des Stirnendbereiches die Einschnürung des Ringkanals für die Transportgasströmung vorgesehen ist, ergibt sich hier ein äußerst kleiner Ringspalt zwischen dem Stirnendbereich und der Einschnürung. Dieser kleine Ringspalt führt zu einer hohen Transportgasgeschwindigkeit an der Zerstäubungsstelle, nämlich der Abrisskante, bei einem gleichzeitig äußerst geringen Transportgasvolumenstrom. Es ergibt sich eine hohe Saug- und Zerstäuberleistung bei äußerst kleinem Differenzdruck, bezogen auf eine Druckdifferenz zwischen einer in Strömungsrichtung gesehenen Eingangsseite der Injektoreinheit und einer Ausgangsseite, die zur Aerosolleitung führt.

In weiterer Ausgestaltung der Erfindung ist der Ringspalt mit einer Dimensionierung von < 0,5 mm, vorzugsweise von etwa 0,1 mm, ausgeführt. Dadurch ist es möglich, im Bereich der Injektoreinheit auch bei äußerst geringen Kanalquerschnitten im Bereich des Aerosolabgangs einen geringeren oder zumindest gleich großen Druckverlust im Bereich des Aerosolabganges zu erzielen und dadurch unabhängig von dem eingesetzten Bearbeitungswerkzeug eine kontinuierliche Aerosolerzeugung zu gewährleisten.

In der Erfindung sind Druckerfassungsmittel im Bereich der Transportgasleitung und im Bereich der Aerosolleitung vorgesehen, und es ist eine Steuereinheit vorgesehen, die abhängig von einem Vergleich von durch die Druckerfassungsmittel erfassten Druck-Istwerten mit in einem Sollwertspeicher anhand verschiedener Parameter für unterschiedliche Bearbeitungsvorgänge abgelegten Druckdifferenzsollwerten einen Differenzdruck zwischen dem Druck in der Transportgasleitung und dem Druck in der Aerosolleitung regelt. Dadurch ist es möglich, eine Differenzdruckregelung zu erzielen, wodurch die erzeugte Aerosolmenge geändert werden kann. Dabei wird die Druckdifferenz zwischen einem eingangsseitigen Druck innerhalb der Transportgasleitung und einem ausgangsseitigen Druck innerhalb der Aerosolleitung geregelt.

In weiterer Ausgestaltung der Erfindung ist der Steuereinheit ein Steuerprogramm zugeordnet, das wenigstens eine Funktionseinheit der Vorrichtung mit unterschiedlichen Steuerbefehlen ansteuert und jeweils Differenzdruckmessungen vornimmt, und anschließend wird ein Vergleich der erfassten Istwerte der Differenzdruckmessungen mit entsprechenden Sollwerten des Sollwertspeichers vorgenommen und schließlich eine Vorauswahl von sinnvollen Parametern aus dem Sollwertspeicher getroffen. Diese Vorauswahl kann in einer entsprechenden Anzeigeeinheit der Bedienperson angezeigt werden. Vorzugsweise ist die Anzeigeeinheit mit einer Dateneingabeeinheit kombiniert, so dass die Bedienperson die gewünschte individuelle Parameterkombination aus der angegebenen Vorauswahl treffen kann. Durch den Start des Steuerprogrammes wird insbesondere der Aerosolerzeuger als Funktionseinheit der Vorrichtung gestartet und an den entsprechenden Stellen werden die Differenzdrücke gemessen. Durch Vergleich mit den im Sollwertspeicher abgelegten Werten kann aus dem Gesamtblock von im Sollwertspeicher abgespeicherten Parameterkombinationen eine Vorauswahl getroffen werden. Diese Vorauswahl wird der Bedienperson angezeigt, wobei minimale und maximale Parameterkombinationen gekennzeichnet werden, so dass die Bedienperson auswählen kann, ob wenig oder viel Schmiermedium gefördert werden soll, oder ob ein Mittelwert zwischen diesen Minimal- und Maximalwerten ausgewählt werden soll. Vorzugsweise ist der Steuereinheit eine Dateneingabeeinheit zugeordnet, mittels der von einer Bedienperson Parameter eines einzusetzenden Werkzeugs eingebbar sind, und es ist als Steuerprogramm ein Datenverarbeitungsprogramm vorgesehen, das abhängig von eingegebenen Parametern der Dateneingabeeinheit einen Vergleich mit allen in dem Sollwertspeicher abgelegten Parametern vornimmt und eine Vorauswahl von auf das einzusetzende Werkzeug abgestimmten, sinnvollen Parameterkombinationen vorgibt, aus denen die Bedienperson eine gewünschte Parameterkombination auswählt. Dadurch werden einer Bedienperson abhängig von dem einzusetzenden Werkzeug Hilfestellungen gegeben, indem eine Vorauswahl von sinnvollen Parameterkombinationen getroffen wird, aus denen die Bedienperson dann die gewünschten Parameter auswählt. Vorzugsweise ist der Dateneingabeeinheit eine Anzeigeeinheit zugeordnet, in der die Vorauswahl des Datenverarbeitungsprogrammes für die Bedienperson erkennbar gemacht wird. Vorteilhaft wird der Bedienperson ein minimaler und ein maximaler Parametersatz, d.h. eine entsprechende Parameterkombination, angezeigt. Der minimale Parametersatz bedeutet vorzugsweise die Einstellung, bei der am wenigsten Schmiermedium gefördert wird. Der maximale Parametersatz entspricht der Einstellung, bei der am meisten Schmiermedium gefördert wird. Dadurch, dass das Gesamtsystem der Vorrichtung betrachtet wird, nämlich vom Aerosolerzeuger über die Aerosolleitungen, die Drehdurchführung der Spindel, die Werkzeugauf nahme und bis zum Kühlkanal im Werkzeug, wird sichergestellt, dass keine Fehleingaben von nicht sinnvollen Parametersätzen getroffen werden können. Für jedes Werkzeug wird somit sichergestellt, dass durch die Vorauswahl geeigneter Parameterkombinationen in jedem Fall eine sinnvolle Werkstückbearbeitung erfolgt, die ein gewünschtes Bearbeitungsergebnis erzielt. Die Bedienperson kann aus den vorausgewählten Parameterkombinationen einen individuellen Parametersatz dem jeweils eingesetzten Werkzeug zuordnen und diesen gegebenenfalls durch entsprechende Speicherung in dem Sollwertspeicher bzw. in der Steuereinheit der Vorrichtung hinterlegen. Besonders vorteilhaft wird die Vorauswahl entsprechender Parameterkombinationen dadurch getroffen, dass die Bedienperson das einzusetzende Werkzeug montiert und ein automatisches Einfahrprogramm startet, mit dem über geeignete Messinstrumente und Speichermethoden durch die Steuereinheit unterschiedliche Ansteuerungen vorgenommen werden und jeweils bei den verschiedenen Ansteuerungen die auftretenden Differenzdrücke gemessen werden. Durch einen entsprechenden Vergleich mit abgespeicherten Werten im Sollwertspeicher können sinnvolle Differenzdrücke vorausgewählt werden, denen dann über die Daten des Sollwertspeichers geeignete weitere Parameter zugeordnet sind. Nach Beendigung des Einfahrprogramms kann die Bedienperson aus den angezeigten, sinnvollen Parameterkombinationen eine gewünschte Parameterkombination auswählen und so eine gewünschte Steuerung bzw. Regelung der Vorrichtung für einen entsprechenden Bearbeitungsvorgang bewirken.

In weiterer Ausgestaltung der Erfindung sind mehrere Injektoreinheiten in Parallelschaltung vorgesehen, denen jeweils ein durch ein Stellglied steuerbarer Leitungszweig der Transportgasleitung zugeordnet ist, und die Stellglieder sind durch die Steuereinheit derart ansteuerbar, dass wenigstens eine Injektoreinheit permanent in Funktion ist. Dadurch ist der Flüssigkeitsanteil innerhalb des Aerosols steuerbar. Vorzugsweise wird als Transportgas Druckluft und als Flüssigkeit Öl vorgesehen. Es ist somit die gewünschte Ölmenge innerhalb des Aerosols steuerbar.

In weiterer Ausgestaltung der Erfindung erfolgt die Ansteuerung der Stellglieder durch die Steuereinheit abhängig von entsprechenden Steuervorgaben des Sollwertspeichers. Vorzugsweise weist der Sollwertspeicher für bestimmte, typische Bearbeitungsvorgänge und für verschiedene Werkzeuge unterschiedliche Flüssigkeitsanteile innerhalb des Aerosols auf. Entsprechende Parameter für verschiedene Werkzeuge und unterschiedliche Bearbeitungsvorgänge sind in dem Sollwertspeicher vorgegeben und können durch Ansteuerung der Stellglieder und entsprechende Zu- oder Abschaltung von wenigstens einer Injektoreinheit angepasst werden. Vorzugsweise ist eine Abhängigkeit dieser Ansteuerung von der Differenzdruckregelung gegeben.

Für die Injektoreinheit wird die der Erfindung zugrundeliegende Aufgabe dadurch gelöst, dass der Kanalabschnitt für die Transportgasströmung als den Kanalbereich des Flüssigkeitsstromes konzentrisch umgebender Ringkanal ausgeführt ist, und dass die Strömungsleitmittel auf Höhe eines stutzenartigen Stirnendbereiches des Kanalbereiches des Flüssig-keitsstromes eine ringförmige Einschnürung umfassen, die gemeinsam mit einem Außenmantel des Stirnendbereiches einen Ringspalt definiert. Dadurch ergibt sich die zuvor bereits angesprochene Drosselwirkung bei äußerst geringem Druckverlust. Vorzugsweise sind die Transportgasströmung und der Flüssigkeitsstrom gleichgerichtet.

In Ausgestaltung der Injektoreinheit verjüngt sich der Kanalabschnitt für die Transportgasströmung in Strömungsrichtung zu der Einschnürung hin trichterförmig, und ein strömungsabwärts des Stirnendbereiches liegender Aerosolkammerabschnitt erweitert sich in Strömungsrichtung korrespondierend trichterförmig. Die Einschnürung ist somit strömungsaufwärts und strömungsabwärts symmetrisch an entsprechende Strömungskanalbereiche angeschlossen. Vorzugsweise wird die Trichterform durch jeweils eine konische Gestaltung gebildet. Die Einschnürung ist vorzugsweise durch eine Zylinderwandung dargestellt. Der stutzenförmige Stirnendbereich für den Flüssigkeitsstrom wird vorzugsweise durch einen hohlzylindrischen Rohrstutzen realisiert. Eine Abrisskante des Stirnendbereiches ist in bevorzugter Weise umlaufend ringförmig und scharfkantig ausgeführt.

Weitere Vorteile und Merkmale der Erfindung ergeben sich aus den Ansprüchen sowie aus der nachfolgenden Beschreibung eines bevorzugten Ausführungsbeispieles der Erfindung, das anhand der Zeichnungen dargestellt ist.
- Fig. 1: zeigt schematisch in einem Blockschaltbild eine Ausführungs- form einer erfindungsgemäßen Vorrichtung zur Aerosolerzeugung und
- Fig. 2: in vergrößerter, schematischer Schnittdarstellung eine Injektoreinheit für die Aerosolerzeugungsvorrichtung nach Fig. 1.

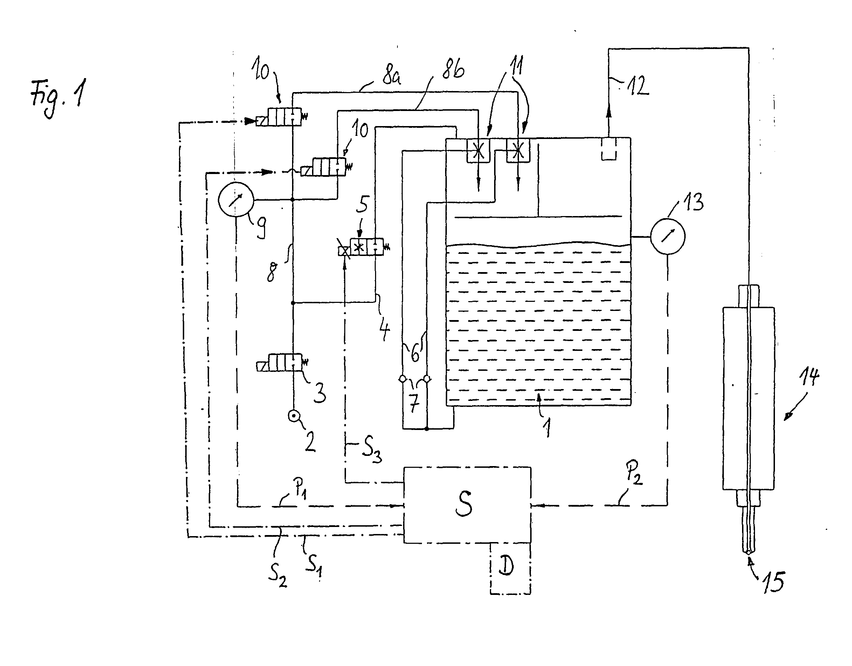

Eine Vorrichtung zur Aerosolerzugung nach Fig. 1 weist einen Flüssigkeitsbehälter, vorliegend in Form eines Ölbehälters, auf. Der Flüssigkeitsbehälter 1 ist lediglich teilweise mit Flüssigkeit gefüllt. Ein oberer Bereich des Flüssigkeitsbehälters 1 dient als Aerosolkammer, wie nachfolgend näher beschrieben werden wird. Die Vorrichtung ist zudem mit einer Transportgasquelle 2 versehen, wobei das Transportgas beim vorliegenden Ausführungsbeispiel als Druckluft ausgeführt ist. An die Druckluftquelle 2 schließt eine als Transportgasleitung dienende Druckluftleitung 8 an, die in Strömungsrichtung unmittelbar hinter der Druckluftquelle 2 mit einem Hauptventil 3 versehen ist. Das Hauptventil 3 ist in eine Sperrposition oder in eine Durchflussposition überführbar.

Die Vorrichtung zur Aerosolerzeugung ist mit mehreren Injektoreinheiten 11, beim vorliegenden Ausführungsbeispiel mit zwei Injektoreinheiten 11, versehen. Die Injektoreinheiten 11 sind innerhalb des als Aerosolkammer bezeichneten, aerosolbildenden Abschnittes des Flüssigkeitsbehälters 1 angeordnet. Von der Aerosolkammer zweigt eine Aerosolleitung 12 ab, die zu einem Bearbeitungswerkzeug 14 führt. Die Aerosolleitung 12 mündet im Bereich einer Bearbeitungsstelle des Werkzeugs an wenigstens einer Austrittsöffnung des Werkzeuges, die einen Aerosol-abgang 15 definiert.

Die beiden Injektoreinheiten 11 dienen dazu, aus einem zugeführten Druckluftstrom und einem angesaugten Ölstrom das Aerosol zu erzeugen, indem der Ölstrom durch die Druckluft zerstäubt wird. Zur Zufuhr der Druckluft ist die Druckluftleitung 8 in zwei Leitungszweige 8a, 8b unterteilt, die jeweils einer der beiden Injektoreinheiten 11 zugeführt sind. An jede Injektoreinheit 11 schließt zudem eine Ölleitung 6 an. Durch den Druckluftstrom wird innerhalb jeder Injektoreinheit 11 ein Unterdruck erzeugt, der das Öl aus der jeweiligen Ölleitung 6 ansaugt. Die Ölleitung 6 ist einem unteren Bereich des Flüssigkeitsbehälters 1 mittels eines Entnahmestutzens an den Flüssigkeitsbehälter 1 angeschlossen und verzweigt sich anschließend in zwei Leitungsabschnitte, die zu jeweils- einer der beiden Injektoreinheiten 11 führen. In jedem Leitungsabschnitt der Ölleitung 6 ist ein Rückschlagventil 7 vorgesehen, das einen Rücklauf von Öl in den Flüssigkeitsbehälter 1 verhindert und zudem für definierte Druckverhältnisse in jedem Leitungszweig der Ölleitung 6 sorgt.

Jedem Leitungszweig 8a, 8b der Druckluftleitung ist jeweils ein als Düsenventil bezeichnetes Stellventil 10 zugeordnet, das den jeweiligen Leitungszweig 8a, 8b für einen Durchfluss frei gibt oder sperrt. Auf Höhe des Abzweiges der beiden Leitungszweige 8a, 8b aus der Druckluftleitung 8 und damit strömungsaufwärts der Stellventile 10 ist in die Druckluftleitung 8 ein Druckaufnehmer 9 eingebracht, der Druckwerte der Druckluftleitung 8 erfassen kann. Auch der Aerosolkammer des Flüssigkeitsbehälters 1 ist ein Druckaufnehmer 13 zugeordnet, der Druckwerte innerhalb der Aerosolkammer aufnimmt, die mit dem jeweiligen Druck innerhalb der Aerosolleitung 12 übereinstimmen. Durch die Druckauf nehmer 9, 13 wird somit sowohl der Druck vor den Injektoreinheiten 11 als auch hinter den Injektoreinheiten 11 - jeweils in Strömungsrichtung gesehen - erfasst.

Die beiden Leitungszweige 8a, 8b der Druckluftleitung sind parallel zueinander geschaltet. In gleicher Weise sind auch die beiden Leitungszweige der Ölleitung 6 parallel zueinander geführt.

Zwischen der Druckluftleitung 8 und der Aerosolkammer ist eine Druckausgleichsleitung 4 verlegt, der ein Regelventil 5, vorliegend in Form eines Proportionalventils, zugeordnet ist. Mittels dieses Regelventils 5 ist es möglich, Druckdifferenzen zwischen dem Druck in der Druckluftleitung 8 und dem Druck in der Aerosolkammer zu steuern.

Zur Ansteuerung des-Regelventils-5-wie-auch-zur Ansteuerung der Stellventile 10 ist eine zentrale Steuereinheit S vorgesehen, an die entsprechende Sigwalleitungen P₁, P₂ der beiden Druckaufnehmer 9, 13 angeschlossen sind. Die zentrale Steuereinheit S ist mit einem Datenspeicher D versehen, der Sollwerte in Form verschiedener Parameter für unterschiedliche Bearbeitungsvorgänge und unterschiedliche Werkzeuge vorgibt. Entsprechende Parametersätze geben für verschiedene Werkzeugtypen und damit für verschiedene Kanalquerschnitte der Werkzeuge im Bereich des Aerosolabgangs 15 wie auch für verschiedene Bearbeitungsarten wie Bohren, Fräsen und ähnliches oder für verschiedene Werkstückmaterialen geeignete Differenzdruckwerte, bezogen auf die Differenz des Druckes in der Druckluftleitung 8 zu dem Druck in der Aerosolleitung 12, vor. Die jeweils vorhandenen Parameter für den entsprechenden Bearbeitungsvorgang werden von einem Bediener in eine nicht näher dargestellte Dateneingabeeinheit der Steuereinheit S eingegeben. Alternativ ist es auch möglich, dass die Vorrichtung durch entsprechende Sensormittel selbst erfassen kann, welche Parameter bei dem jeweiligen Bearbeitungsvorgang zum Einsatz kommen. Hierauf wird an dieser Stelle nicht näher eingangen.

Beim dargestellten Ausführungsbeispiel wird durch manuelle Bedienung die entsprechende Parametervorgabe gesetzt. Die vorgegebenen Parameter werden in der zentralen Steuereinheit S mit den im Datenspeicher D vorhandenen Parametersätzen verglichen. Abhängig vom Ergebnis des Vergleiches werden über Steuerleitungen S₁, S₂ zum einen die Stellventile 10 für die Zu- oder Abschaltung der Leitungszweige 8a, 8b der Druckluftleitung angesteuert. Zum anderen wird das als Proportionalventil ausgeführte Regelventil 5 angesteuert, um die entsprechende Druckdifferenzregelung zwischen der Druckluftleitung 8 und der Aerosolleitung 12 bzw. der Aerosolkammer innerhalb des Flüssigkeitsbehälters 1 zu steuern. Dadurch, dass Istwerte der jeweils vorhandenen Drücke in der Druckluftleitung 8 und in der Aerosolleitung 12 über die Druckaufnehmer 9, 13 erfasst und über die Signalleitungen P₁, P₂ der Steuerein-heit S zugeführt werden, kann die Steuereinheit S einen ständigen Vergleich mit den im Datenspeicher D abgelegten, für bestimmte Parametersätze vorgegebenen Differenzdruckwerten durchführen und das Regelventil 5 abhängig vom Ergebnis des Vergleiches ansteuern.

Beim dargestellten Ausführungsbeispiel nach Fig. 1 sind aus Übersichtlichkeitsgründen lediglich zwei Injektoreinheiten 11 vorgesehen. Bei praktischen Ausführungsbeispielen sind jedoch abhängig davon, welche Ölmenge der Druckluft zugemischt werden soll, auch mehr als zwei Injektoreinheiten 11 parallel geschaltet.

In nicht näher dargestellter Weise ist der Flüssigkeitsbehälter 1 mit einem Flüssigkeitsvorratsbehälter verbunden und mit einer Füllstandsüberwachung versehen, um rechtzeitig eine Ölnachfüllung in den vor allem als Aerosolbehälter dienenden Flüssigkeitsbehälter 1 zu ermöglichen.

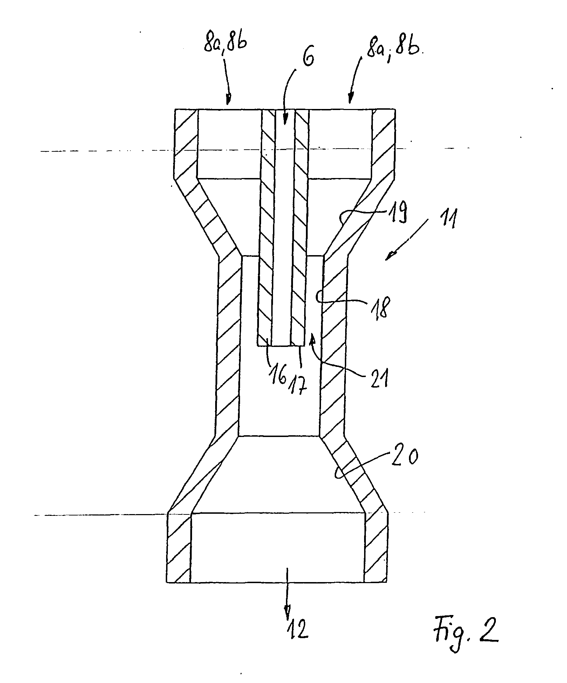

Jede Injektoreinheit 11 ist gemäß der Darstellung nach Fig. 2 ausgeführt. Wie anhand der Fig. 2 erkennbar ist, ist eine zentrische Ölzufuhr vorgesehen. Der Druckluftstrom wird außen an der Ölzufuhr vorbeigeführt. Hierzu weist die Injektoreinheit einen durch einen hohlzylindrischen Rohrabschnitt definierten Kanalbereich auf, in den der jeweilige Leitungszweig der Ölleitung 6 mündet. Der zentrale Kanalbereich 16 ist durch einen ringförmigen Kanalabschnitt konzentrisch umschlossen, in den der jeweilige Leitungszweig 8a oder 8b der Druckluftleitung mündet. Der Ringkanal für die Druckluftströmung weist einen konischen Verjüngungsabschnitt 19 auf, der zu einer Einschnürung 18 führt. Die Einschnürung 18 wird durch einen zylindrischen Wandungsabschnitt gebildet, der einen zylindrischen Außenmantel des Kanalbereiches für den Ölstrom koaxial umschließt. Zwischen der Einschnürung 18 und dem zylindrichen Außenmantel des Kanalbereiches für den Ölstrom verbleibt ein Ringspalt 21, der äußerst klein gestaltet ist und beim dargestellten Ausführungsbeispiel ca. 0,1 mm breit ist.

Auf axialer Höhe der Einschnürung 18 endet der Kanalbereich für die Ölleitung 6 und bildet einen Stirnendbereich 16. Der Stirnendbereich 16 ist an seinem unteren Rand mit einer umlaufenden und scharfkantigen Abrisskante 17 versehen.

In Abstand unterhalb der Abrisskante 17 und damit strömungsabwärts befindet sich ein Aerosolkammerabschnitt, der in die Aerosolkammer des Flüssigkeitsbehälters 1 und damit in die Aerosolleitung 12 mündet.
Der Aerosolkammerabschnitt weist einen konischen Erweiterungsbereich 20 auf, der korrespondierend zu dem konischen Verjüngungsbereich 19 der Injektoreinheit 11 dimensioniert ist.

Durch den äußerst schmalen Ringspalt 21 ergibt sich im Bereich der Abrisskante 17 eine äußerst hohe Strömungsgeschwindigkeit der Druckluft bei einem gleichzeitig äußerst geringen Volumenstrom. Der entstehende Unterdruck am Stirnendbereich 16 der Ölleitung 6 führt zum Ansaugen und Zerstäuben der Öltröpfchen. Durch die hohe Strömungsgeschwindigkeit und den gleichzeitig geringen Volumenstrom ergibt sich im Bereich der Injektoreinheit 11, d.h. an der Zerstäuberstelle, lediglich ein sehr geringer Differenzdruck, d.h. ein äußerst geringer Druckverlust. Die Injektoreinheit 11, die auch als Zerstäuberdüsen bezeichnet werden, sind so klein ausgeführt, dass der Druckverlust im Bereich einer Injektoreinheit 11 in jedem Fall geringer ist als der Druckverlust im Bereich des Aerosolabganges 15 auch dann, wenn ein Bearbeitungswerkzeug mit einem äußerst kleinen Kanalquerschnitt im Austrittsbereich des Schmier- oder Kühlmittels, d.h. im Bereich des Aerosolabgangs 15, vorgesehen ist. Dadurch ist gewährleistet, dass eine permanente und kontinuierliche Aerosolerzeugung möglich ist. Die Stellventile 10 der Leitungszweige 8a, 8b der Druckluftleitung 8 sind so angesteuert, dass immer wenigstens eines der Stellventile 10 geöffnet ist, so dass ein permanenter Druckluftstrom durch wenigstens eine Injektoreinheit 11 sichergestellt ist.

Dies wäre nicht möglich, falls - wie beim Stand der Technik üblich - der Druckverlust im Bereich einer Injektoreinheit größer wäre als ein minimal möglicher Druckverlust im Bereich des Aerosolabgangs.

Die Steuereinheit S unterscheidet abhängig von den vorgeschlagenen Parametersätzen des Datenspeichers D und den manuell eingegebenen, an der Werkzeugmaschine 14 jeweils vorhandenen Parametern zwischen kleinsten, kleinen, mittleren und großen Kühl- oder Schmierkanälen und gibt für diese unterschiedlichen Kühl- oder Schmierkanäle verschiedene Differenzdrücke vor. Zudem gibt sie vor, wie viele Injektoreinheiten 11 zugeschaltet werden sollen, d.h. wie groß der Ölanteil innerhalb des Aerosols sein soll.

## Patentansprüche

1. Verfahren zur Erzeugung eines Aerosols als Schmier- und Kühlmittel für ein Werkzeug, bei dem ein Flüssigkeitsstrom und eine Transportgasströmung in einer Injektoreinheit (11) zu dem Aerosol vermischt werden, das mittels einer Aerosolleitung (12) zu einem im Bereich des Werkzeugs (14) angeordneten Aerosolabgang (15) geführt wird, **dadurch gekennzeichnet, dass** *die Injektoreinheit (11) Strömungsleitmittel* (*16 bis 18*) *für die Transportgasströmung aufweist, die eine Ansaug- und Zerstäubungsfunktion für den Flüssigkeitsstrom bei einem Druckverlust für die Transportgasströmung definieren, dass* durch eine hohe Strömungsgeschwindigkeit und einen gleichzeitig geringen Volumenstrom an der Zerstäuberstelle im Bereich der Injektoreinheit (11) ein geringerer Druckverlust der Transportgasströmung als ein minimal möglicher Druckverlust an dem Aerosolabgang (15) eingestellt wird, und *dass Druckerfassungsmittel* (*9*, *13) im Bereich der Transportgasleitung (8) und im Bereich der Aerosolleitung (12) vorgesehen sind, wobei eine Steuereinheit S abhängig von einem Vergleich von durch die Druckerfassungsmittel (9, 13) erfassten Druck-istwerten mit in einem Solfwertspeicher (D) anhand verschiedener Parameter für unterschledliche Bearbeitungsvorgänge abgelegten Druckdifferenz-So*/*lwerten einen Differenzdruck zwischen dem Druck in der Transportgasleitung (8) und dem Druck in der Aerosolleitung (12) regelt.*

2. Vorrichtung zur Durchführung eines Verfahrens nach Anspruch 1 mit einer injektorelnheit (11), die wenigstens einen Kanalabschnitt für die Transportgasströmung und wenigstens einen Kanalbereich für den Flüssigkeltsstrom aufweist, **dadurch** gekennaeichnet, dass *die injektoreinheit (11) Strömungsleitmittel (16 bis 18) für die Transportgasströmung aufweist, die eine Ansaug- und Zerstäubungsfunktion für den Flüssigkeitsstrom bei einem Druckverlust für die Transportgasströmung definieren, dass* der Kanalabschnitt für die Transportgasströmung als den Kanalbereich für den Flüssigkeitsstrom konzentrisch umgeben der Ringkanal ausgeführt ist, und dass der Ringkanal eine ringförmige Einschnürung (18) aufweist, die gemeinsam mit einem Außenmantel des Stirnendberelchs (16) des Kanalbereichs für den Flüssigkeitsstrom einen Ringspalt (21) bildet und dass eine Steuereinheit (S) vorgesehen ist, die durch eine hohe Strömungsgeschwindigkeit und einen gleichzeitig geringen Volumenstrom an der Zerstäuberstelle im Bereich der Injektoreinheit (11) einen geringeren Druckverlust der Transportgasströmung als ein minimal möglicher Druckverlust an dem Aerosolabgang (15) einstellt *und dass* Druckerfassungsmittel (9, 13) im Bereich der Transportgasleitung (8) und Im Bereich der Aerosolleitung (12) vorgesehen sind, *und dass eine Steuereinheit S vorgesehen ist, die abhängig von einem Vergleich von durch die Druckerfassungsmittel (9, 13) erfassten Druck-Istwerten mit in einem Sollwertspeicher (D) anhand verschledener Parameter für unterschiedliche Bearbeitungsvorgänge abgelegten Druckdifferenz-Sollwerten einen Differenzdruck zwischen dem Druck in der Transportgasleitung (8) und dem Druck in der Aerosolleitung (12) regelt.*

3. Vorrichtung nach Anspruch 2, **dadurch gekennzeichnet, dass** der Kanalabschnitt für die Transportgasströmung der Injektoreinheit (11) sich in Strömungsrichtung zu der Einschnürung (18) hin trichterförmig verjüngt und dass die Injektoreinheit (11) einen strömungsabwarts des Stirnendbereiches (16) liegender Aerosolkammerabschnitt (20) aufweiset, der sich in Strömungsrichtung korrespondierend trichterförmig erweitert.

4. Vorrichtung nach Anspruch 2 oder 3, **dadurch gekennzeichnet, dass** der Ringspalt (21) mit einer Dimensionierung von weniger als 0,5 mm Breite, vorzugsweise von etwa 0,1 mm Breite, ausgeführt ist.

5. Vorrichtung *nach einem der Ansprüche 2-4*, **dadurch gekennzeichnet, dass** der Steuereinheit ein Steuerprogramm zugeordnet ist, das wenigstens eine Funktionseinheit der Vorrichtung, insbesondere einen Aerosolerzeuger, mit unterschiedlichen Steuerbefehlen ansteuert und jeweils mittels der Druckerfassungsmittel Differenzdruckmessungen vornimmt, und dass ein Vergleich der erfassten Istwerte der Differenzdruckmassungen mit entsprechenden Sollwerten des Sollwertspeichers vorgenommen und schließlich eine Vorauswahl von sinnvollen Parametern aus dem Sollwertspelcher getroffen wird.

6. Vorrichtung *nach Anspruch 5*, **dadurch gekennzeichnet, dass** mehrere Injektoreinheiten (11) in Parallelschaltung vorgesehen sind, denen jeweils ein durch ein Stellglied (10) steuerbarer Leitungszweig (8a, 8b) der Transportgasleitung (8) zugeordnet ist, und dass die Stellglieder (10) durch die Steuereinheit (S) derart ansteuerbar sind, dass wenigstens eine Injektoreinheit (11) permanent in Funktion ist.

7. Vorrichtung nach Anspruch 6, **dadurch gekennzeichnet, dass** die Ansteuerung der Stellglieder (10) durch die Steuereinheit (S) abhängig von entsprechenden Steuervorgaben des Sollwertspeichers (D) erfolgt.

## Claims

1. Method for producing an aerosol as a lubricant and coolant for a tool, in which a liquid flow and a transport gas flow are mixed in an injector unit (11) to form the aerosol, which is guided by means of an aerosol line (12) to an aerosol discharge (15) arranged in the region of the tool (14), **characterized in that** the injector unit (11) has flow conducting means (16 to 18) for the transport gas flow, which define a sucking-in and atomizing function for the liquid flow when there is a pressure loss for the transport gas flow, **in that** a lower pressure loss of the transport gas flow than a minimum possible pressure loss is set at the aerosol discharge (15) by a high flow speed and at the same time a low volumetric flow at the atomizing location in the region of the injector unit (11), and **in that** pressure sensing means (9, 13) are provided in the region of the transport gas line (8) and in the region of the aerosol line (12), a control unit S controlling a differential pressure between the pressure in the transport gas line (8) and the pressure in the aerosol line (12) depending on a comparison of actual pressure values sensed by the pressure sensing means (9, 13) with set pressure differential values stored in a set-value memory (D) on the basis of various parameters for different machining operations.

2. Device for carrying out a method according to Claim 1, with an injector unit (11), which has at least one channel portion for the transport gas flow and at least one channel region for the liquid flow, **characterized in that** the injector unit (11) has flow conducting means (16 to 18) for the transport gas flow, which define a sucking-in and atomizing function for the liquid flow when there is a pressure loss for the transport gas flow, **in that** the channel portion for the transport gas flow is configured as an annular channel concentrically surrounding the channel region for the liquid flow, and **in that** the annular channel has an annular constriction (18), which together with an outer casing of the end region (16) of the channel region for the liquid flow forms an annular gap (21) and **in that** a control unit (S) is provided, which sets a lower pressure loss of the transport gas flow than a minimum possible pressure loss at the aerosol discharge (15) by a high flow speed and at the same time a low volumetric flow at the atomizing location in the region of the injector unit (11) and **in that** pressure sensing means (9, 13) are provided in the region of the transport gas line (8) and in the region of the aerosol line (12), and **in that** a control unit S is provided, which controls a differential pressure between the pressure in the transport gas line (8) and the pressure in the aerosol line (12) depending on a comparison of actual pressure values sensed by the pressure sensing means (9, 13) with set pressure differential values stored in a set-value memory (D) on the basis of various parameters for different machining operations.

3. Device according to Claim 2, **characterized in that** the channel portion for the transport gas flow of the injector unit (11) narrows in a funnel-shaped manner in the direction of flow towards the constriction (18) and **in that** the injector unit (11) has an aerosol chamber portion (20) lying downstream of the end region (16) that widens in a correspondingly funnel-shaped manner in the direction of flow.

4. Device according to Claim 2 or 3, **characterized in that** the annular gap (21) is configured with dimensioning of less than 0.5 mm in width, preferably of approximately 0.1 mm in width.

5. Device according to one of Claims 2-4, **characterized in that** the control unit is assigned a control program, which activates at least one functional unit of the device, in particular an aerosol producer, with different control commands and in each case performs differential pressure measurements by means of the pressure sensing means, and **in that** a comparison of the sensed actual values of the differential pressure measurements with corresponding set values of the set-value memory is performed, and finally a preselection of appropriate parameters is made from the set-value memory.

6. Device according to Claim 5, **characterized in that** a number of injector units (11) are provided in parallel connection, to which a control branch (8a, 8b) of the transport gas line (8) that can be controlled by an actuating element (10) is respectively assigned, and **in that** the actuating elements (10) can be activated by the control unit (S) in such a way that at least one injector unit (11) is permanently functioning.

7. Device according to Claim 6, **characterized in that** the activation of the actuating elements (10) by the control unit (S) takes place in dependence on corresponding control defaults of the set-value memory (D).

## Revendications

1. Procédé pour la production d'un aérosol sous forme de lubrifiant et de réfrigérant pour un outil, dans lequel un jet de liquide et un écoulement de gaz de transport sont mélangés dans une unité d'injection (11) pour donner l'aérosol, qui est guidé au moyen d'une conduite d'aérosol (12) jusqu'à une sortie d'aérosol (15) disposée dans la région de l'outil (14), **caractérisé en ce que** l'unité d'injection (11) présente des moyens de conduite de l'écoulement (16 à 18) pour l'écoulement du gaz de transport, qui définissent une fonction d'aspiration et de pulvérisation pour le jet de liquide en cas de perte de pression pour l'écoulement de gaz de transport, **en ce qu'**une plus faible perte de pression de l'écoulement de gaz de transport par rapport à une perte de pression minimale possible est ajustée au niveau de la sortie d'aérosol (15) par le biais d'une grande vitesse d'écoulement et simultanément d'un faible débit volumique au niveau du point de pulvérisation dans la région de l'unité d'injection (11), et **en ce que** des moyens de détection de la pression (9, 13) sont prévus dans la région de la conduite de gaz de transport (8) et dans la région de la conduite d'aérosol (12), une unité de commande S régulant une pression différentielle entre la pression dans la conduite de gaz de transport (8) et la pression dans la conduite d'aérosol (12) en fonction d'une comparaison de valeurs réelles de pression détectées par les moyens de détection de la pression (9, 13) avec des valeurs de consigne de pression différentielle saisies pour différentes opérations de traitement dans une mémoire de valeurs de consigne (D) à l'aide de différents paramètres.

2. Dispositif pour mettre en oeuvre un procédé selon la revendication 1, comprenant une unité d'injection (11) qui présente au moins une portion de canal pour l'écoulement de gaz de transport et au moins une région de canal pour le jet de liquide, **caractérisé en ce que** l'unité d'injection (11) présente des moyens de conduite de l'écoulement (16 à 18) pour l'écoulement de gaz de transport, qui définissent une fonction d'aspiration et de pulvérisation pour le jet de liquide en cas de perte de pression pour l'écoulement de gaz de transport, **en ce que** la portion de canal pour l'écoulement de gaz de transport est réalisée sous forme de canal annulaire entourant concentriquement la région de canal pour le jet de liquide, et **en ce que** le canal annulaire présente un rétrécissement annulaire (18) qui forme conjointement avec une enveloppe extérieure de la région d'extrémité frontale (16) de la région de canal une fente annulaire (21) pour le jet de liquide et **en ce qu'**une unité de commande (S) est prévue, laquelle ajuste une plus faible perte de pression de l'écoulement de gaz de transport par rapport à une perte de pression minimale possible au niveau de la sortie d'aérosol (15) par une grande vitesse d'écoulement et simultanément un débit volumique faible au niveau du point de pulvérisation dans la région de l'unité d'injection (11) et **en ce que** des moyens de détection de la pression (9, 13) sont prévus dans la région de la conduite de gaz de transport (8) et dans la région de la conduite d'aérosol (12), et **en ce qu'**une unité de commande S est prévue, laquelle régule une pression différentielle entre la pression dans la conduite de gaz de transport (8) et la pression dans la conduite d'aérosol (12) en fonction d'une comparaison de valeurs réelles de pression détectées par les moyens de détection de la pression (9, 13) avec des valeurs de consigne de pression différentielle saisies pour différentes opérations de traitement dans une mémoire de valeurs de consigne (D) à l'aide de différents paramètres.

3. Dispositif selon la revendication 2, **caractérisé en ce que** la portion de canal pour l'écoulement de gaz de transport de l'unité d'injection (11) se rétrécit en forme d'entonnoir dans la direction d'écoulement vers le rétrécissement (18) et **en ce que** l'unité d'injection (11) présente une portion de chambre d'aérosol (20) située en aval de la région d'extrémité frontale (16), qui s'élargit de manière correspondante en forme d'entonnoir dans la direction d'écoulement.

4. Dispositif selon la revendication 2 ou 3,
**caractérisé en ce que** la fente annulaire (21) est réalisée avec un dimensionnement inférieur à 0,5 mm de large, de préférence d'environ 0,1 mm de large.

5. Dispositif selon l'une quelconque des revendications 2 à 4, **caractérisé en ce que** l'on associe à l'unité de commande un programme de commande qui commande au moins une unité fonctionnelle du dispositif, en particulier un générateur d'aérosol, avec différents ordres de commande, et qui effectue à chaque fois au moyen du moyen de détection de la pression, des mesures de pression différentielle, et **en ce qu'**une comparaison des valeurs réelles détectées des mesures de pression différentielles avec des valeurs de consigne correspondantes de la mémoire de valeurs de consignes est effectuée et finalement une présélection de paramètres judicieux dans la mémoire de valeurs de consignes est effectuée.

6. Dispositif selon la revendication 5, **caractérisé en ce que** plusieurs unités d'injection (11) sont prévues dans un montage en parallèle, auxquelles on associe à chaque fois une branche de conduite (8a, 8b) de la conduite de gaz de transport (8) pouvant être commandée par un organe de commande (10), et **en ce que** les organes de commande (10) peuvent être commandés par l'unité de commande (S) de telle sorte qu'au moins une unité d'injection (11) soit toujours en fonctionnement.

7. Dispositif selon la revendication 6, **caractérisé en ce que** la commande des organes de commande (10) s'effectue par l'unité de commande (S) en fonction de valeurs de commande prédéfinies correspondantes de la mémoire de valeurs de consigne (D).
